# EUROPÄISCHE PATENTSCHRIFT

(11) **EP 1 489 438 B1**
(45) Veröffentlichungstag und Bekanntmachung des Hinweises auf die Patenterteilung: **05.09.2007**
(21) Anmeldenummer: 04009763.6
(22) Anmeldetag: 24.04.2004
(51) Int. Cl.: G02B 3/00, G02B 3/06, G02B 27/09, G02B 27/10

(54) **Zylinderlinsenarray zur Homogenisierung eines Lichtstrahls**
Cylindrical lens array for homogenization of a light beam
Réseau de lentilles cylindriques pour homogénisation d'un faisceau de lumière

(30) Priorität: 18.06.2003 DE 10327733
(43) Veröffentlichungstag der Anmeldung: 22.12.2004
(73) Patentinhaber: Hentze-Lissotschenko Patentverwaltungs GmbH & Co. KG, 36419 Gerstengrund (DE)
(72) Erfinder: Hauschild, Dirk, 44229 Dortmund (DE)
(74) Vertreter: Basfeld, Rainer

(56) Entgegenhaltungen:
- EP-A- 0 603 861
- US-A- 5 477 383
- US-A- 5 775 799
- US-A- 5 796 521
- US-B1- 6 239 913
- US-B1- 6 373 633

## Beschreibung

Die vorliegende Erfindung betrifft eine Vorrichtung zur Formung eines Lichtstrahlsgemäß dem Oberbegriff des Anspruchs 1.

Vorrichtungen der vorgenannten Art werden beispielsweise dazu verwendet, Laserstrahlen, insbesondere Laserstrahlen von Excimerlasern, zu homogenisieren. Aus der DE 199 15 000 A1 ist beispielsweise eine Vorrichtung zur Homogenisierung eines Excimerlaserstrahls bekannt, die zwei Linsenarrays aus sphärischen Zylinderlinsen umfasst. Die Linsenarrays bilden dabei zwei zueinander beabstandete optisch funktionale Grenzflächen, durch die der zu formende Lichtstrahl nacheinander hindurchtreten kann. Die Zylinderlinsen auf den beiden zueinander beabstandeten optisch funktionalen Grenzflächen sind dabei sequentiell angeordnet, derart, dass ein im wesentlich senkrecht auf die erste optisch funktionale Grenzfläche auftreffender Teilstrahl durch eine Zylinderlinse der ersten optisch funktionalen Grenzfläche hindurchtritt und daran anschließend durch eine mit dieser Zylinderlinse fluchtende Zylinderlinse der zweiten optisch funktionalen Grenzfläche hindurchtritt. Die durch die beiden optisch funktionalen Grenzflächen hindurchgetretenen Teilstrahlen können durch eine als Fourierlinse ausgebildete Sammellinse in einer Bearbeitungsebene überlagert werden. Als nachteilig bei dieser Vorrichtung erweist sich, dass die sphärischen Zylinderlinsen derart nebeneinander angeordnet sind, dass zwischen ihnen ein nicht definierter Übergangsbereich entsteht, durch den auf diesen Übergangsbereich auftreffendes Licht unkontrolliert hindurchgelassen beziehungsweise gestreut wird. Dadurch kann einerseits die Intensitätsverteilung der Laserstrahlung in der Bearbeitungsebene nachteilig beeinflusst werden und andererseits kann nicht die komplette Fläche der optisch funktionalen Grenzflächen für die Formung des Laserstrahls genutzt werden.

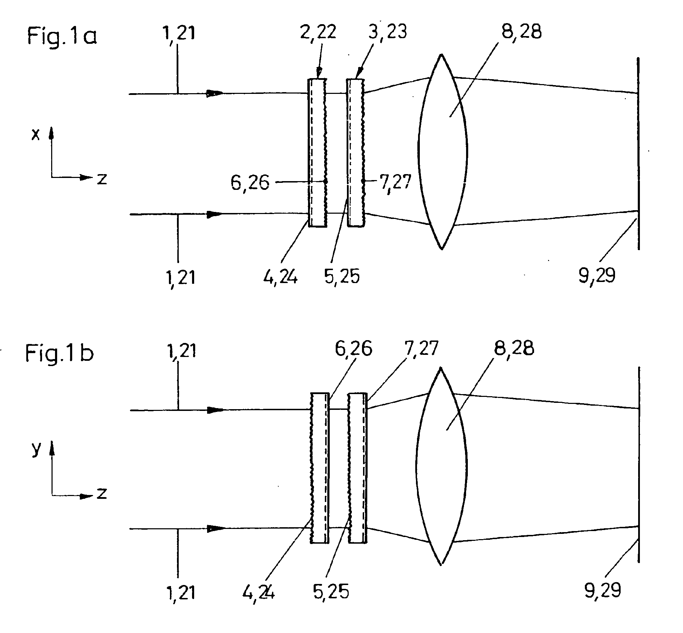

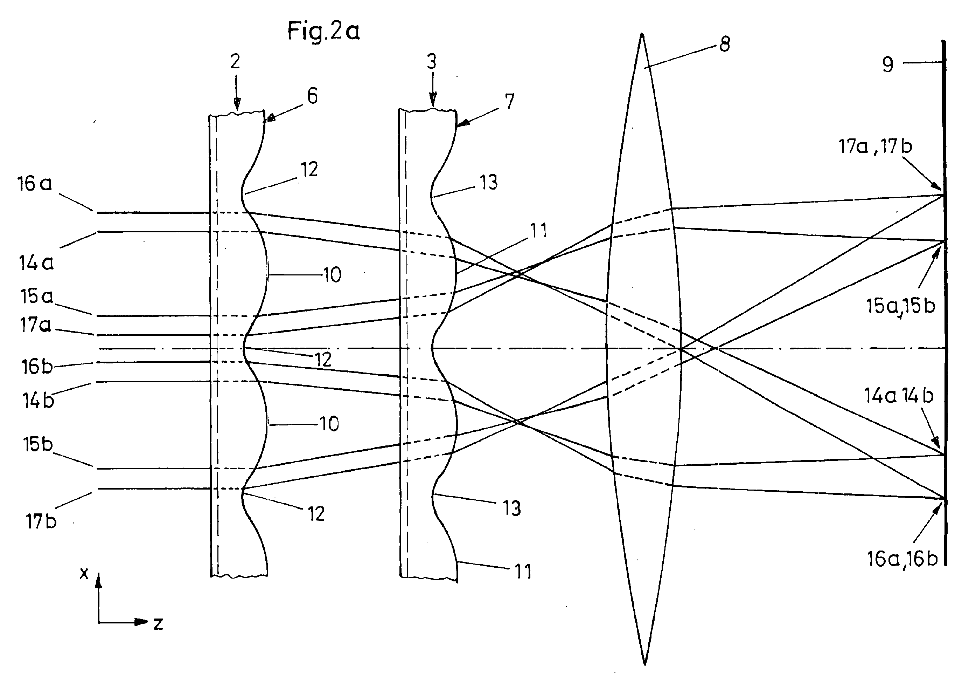

Aus der US 6,239,913 B1 ist eine Vorrichtung bekannt, bei der auf beiden optisch funktionalen Grenzflächen jeweils eine Gruppe von konvexen Zylinderlinsen und eine Gruppe von konkaven Zylinderlinsen angeordnet sind. Die konvexen und die konkaven Zylinderlinsen wechseln dabei einander ab, so dass die gesamte Grenzfläche durch die konvexen und konkaven Linsenstrukturen abgedeckt ist. Eine gemäß diesem US-Patent mögliche Vorrichtung ist aus den Fig. 1a, Fig. 1b und Fig. 2a ersichtlich. In den Figuren sind zur besseren Übersichtlichkeit kartesische Koordinatensysteme eingezeichnet.

In Fig. 1a und Fig. 1b ist ein zu formender Laserstrahl 1 ersichtlich, der sich in positiver Z-Richtung bewegt. Der Laserstrahl 1 tritt durch zwei Linsenarrays 2, 3 hindurch, die jeweils auf der Eintrittsfläche optisch funktionale Grenzflächen 4, 5 und auf der Austrittsfläche optisch funktionale Grenzflächen 6, 7 aufweisen. Der durch die Linsenarrays 2, 3 hindurchgetretene Laserstrahl tritt durch ein als Fourierlinse dienendes als Bikonvexlinse ausgebildetes Linsenmittel 8 hindurch und wird von diesem in eine Bearbeitungsebene 9 fokussiert. In der Bearbeitungsebene-9 werden einzelne Teilstrahlen des Laserstrahls 1 überlagert. Aus Fig. 1a und Fig. 1b ist ersichtlich, dass die optisch funktionalen Grenzflächen 4, 5 auf der Eintrittsfläche zylinderlinsenähnliche Strukturen aufweisen, deren Achsen sich in X-Richtung erstrecken, wohingegen die optisch funktionalen Grenzflächen 6, 7 auf der Austrittsfläche der Linsenarrays 2, 3 zylinderlinsenähnliche Strukturen aufweisen, deren Zylinderachsen sich in Y-Richtung erstrecken.

Aus Fig. 2a ist die Strahlformung des Laserstrahles 1 hinsichtlich der X-Richtung durch die optisch funktionalen Grenzflächen 6, 7 auf den Austrittsflächen der Linsenarrays 2, 3 deutlicher ersichtlich. Insbesondere sind von den Linsenarrays 2, 3 nur Ausschnitte abgebildet. Fig. 2a ist zu entnehmen, dass die optisch funktionalen Grenzflächen 6, 7 auf den Austrittsflächen jeweils abwechselnd konvexe Zylinderlinsen 10, 11 und konkave Zylinderlinsen 12, 13 aufweisen. Anhand der beispielhaft eingezeichneten Teilstrahlen 14a, 14b und 15a, 15b ist ersichtlich, dass auf entsprechenden Stellen der konvexen Zylinderlinsen 10 des ersten Linsenarrays 2 auftreffende Teilstrahlen 14a, 14b beziehungsweise 15a, 15b unter gleichen Austrittswinkeln die konvexen Zylinderlinsen 10 verlassen und durch die jeweils mit den entsprechenden konvexen Zylinderlinsen 10 fluchtenden Zylinderlinsen 11 des zweiten Linsenarrays 3 hindurchtreten. Die aus den konvexen Zylinderlinsen 11 des zweiten Linsenarrays 3 austretenden Teilstrahlen 14a, 14b beziehungsweise 15a, 15b verlassen diese konvexen Zylinderlinsen 11 unter gleichen Winkeln, so dass sie von dem als Fourierlinse dienenden Linsenmittel 8 in der Bearbeitungsebene 9 an die gleiche Stelle fokussiert werden. Die ist in Fig. 2a auf der rechten Seite deutlich ersichtlich. Durch die Fourierlinse wird somit eine Überlagerung der durch unterschiedliche konvexe Linsen 10, 11 hindurchgetretenen Teilstrahlen ermöglicht.

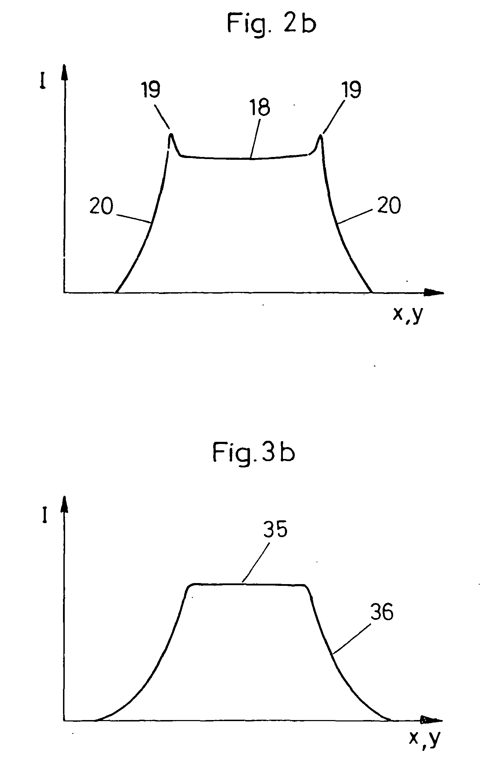

Als problematisch erweisen sich die durch die konkaven Zylinderlinsen 12 des ersten Linsenarrays 2 hindurchgetretenen Teilstrahlen 16a, 16b beziehungsweise 17a, 17b. Die jeweils durch eine der konkaven Linsen 12 hindurchtretenden Teilstrahlen 17a, 16b treten bei dem zweiten Linsenarray 3 durch unterschiedliche konvexe Zylinderlinsen 11 hindurch, so dass sie an unterschiedlichen Stellen auf die Bearbeitungsebene 9 auftreffen. Allerdings werden an gleichen Stellen benachbarter konkaver Zylinderlinsen 12 des ersten Linsenarrays 2 auftreffende Teilstrahlen 17a, 17b unter einem gleichen Winkel in das Linsenarray 3 eintreten und an der gleichen Stelle der Bearbeitungsebene 9 miteinander überlagert, wie dies aus der rechten Seite der Fig. 2a ersichtlich ist. Es zeigt sich, dass die durch die konkaven Zylinderlinsen 12 des ersten Linsenarrays 2 hindurchgetretenen Teilstrahlen 16a, 16b beziehungsweise 17a, 17b im Wesentlichen am Rand des Bereiches, in dem die Laserstrahlung in der Bearbeitungsebene 9 miteinander überlagert wird, auftreffen. Daraus ergibt sich in der Bearbeitungsebene 9 eine Intensitätsverteilung, wie sie aus Fig. 2b ersichtlich ist. Bei dieser Intensitätsverteilung gibt es ein mittiges vergleichsweise ebenes Plateau 18 und zwei äußere Intensitätsspitzen 19, die über das Niveau des Plateaus 18 nach oben hinausragen. An die äußeren Intensitätsspitzen 19 schließen sich jeweils nach außen abfallende Flanken 20 an. Diese äußeren Intensitätsspitzen 19 erweisen sich bei verschiedenen Anwendungen als äußerst störend. Es wäre insbesondere wünschenswert, eine vergleichsweise gleichmäßige Intensitätsverteilung, insbesondere eine Intensitätsverteilung zu erzielen, bei der die Intensitätsspitzen 19 nicht auftreten.

Das US-Patent US 6,373,633 offenbart eine Vorrichtung der eingangs genannten Art mit einem Linsenarray, das eine erste optische Grenzfläche mit einer Mehrzahl von einzelnen Abschnitten sowie eine zweite optische Grenzfläche in einem von dem Linsenarray beabstandeten weiteren Linsenarray aufweist Ein jeder der Abschnitte der Linsenarrays kann dabei als Linse dienen. Einzelne dieser Abschnitte weisen dabei eine positive optische Brechkraft auf, wohingegen andere dieser Abschnitte eine negative optische Brechkraft aufweisen. Weiterhin können sich einzelne Abschnitte durch ihre Apertur, die absolute Größe ihrer Brechkraft oder durch ihren Abstand zu einer zusätzlichen Einzellinse unterscheiden. Durch die einzelnen Abschnitte des Linsenarrays hindurch getretenes Licht kann von der Einzellinse in einer Arbeitsebene überlagert werden, so dass dort eine gewünschte Lichtverteilung entsteht.

Das US-Patent US 5,796,521 offenbart eine Vorrichtung zur Homogenisierung von Laserstrahlung mit einem ersten Array plankonvexer Zylinderlinsen und einem zweiten von dem ersten beabstandeten Array plankonvexer Zylinderlinsen. Die durch eine Zylinderlinse des ersten Arrays hindurch getretene Strahlung trifft auf eine Zylinderlinse des zweiten Arrays auf. Bei dem zweiten Array sind mindestens zwei Gruppen unterschiedlicher plankonvexer Zylinderlinsen vorgesehen, die jeweils das auf Mitglieder einer Gruppe auftreffende Licht in einen bestimmten Fokusbereich ablenken. Somit gibt es bei zwei Gruppen zwei Fokusbereiche und bei drei Gruppen drei Fokusbereiche. Innerhalb der einzelnen Gruppen können einzelne der Zylinderlinsen unterschiedliche Abmessungen aufweisen.

Das der vorliegenden Erfindung zugrundeliegende Problem ist die Schaffung einer Vorrichtung der eingangs genannten Art, die bei vergleichsweise vollständiger Ausnutzung der optisch funktionalen Grenzflächen eine besser anwendbare Intensitätsverteilung generieren kann.

Dies wird erfindungsgemäß durch eine Vorrichtung der eingangs genannten Art mit den Merkmalen des kennzeichnenden Teils des Anspruchs 1 erreicht. Die Unteransprüche betreffen bevorzugte Ausbildungen der Erfindung.

Durch unterschiedliche Eigenschaften mindestens zweier, insbesondere mehrerer Zylinderlinsen innerhalb einer Gruppe kann vermieden werden, dass beispielsweise im Randbereich einer Intensitätsverteilung Teilstrahlen derart überlagert werden, dass störende Intensitätsspitzen entstehen. Auf diese Weise kann mit der erfindungsgemäßen Vorrichtung in der Arbeitsebene eine Intensitätsverteilung geschaffen werden, die für manche Anwendungen geeigneter ist als die zum Stand der Technik beschriebene aus Fig. 2b ersichtliche Intensitätsverteilung. Die erfindungsgemäße Vorrichtung eignet sich beispielsweise für Anwendungen in der Lithografie.

Es besteht hierbei die Möglichkeit, dass die mindestens zwei Zylinderlinsen einer Gruppe unterschiedlich hinsichtlich ihrer Brennweite sind. Alternativ oder zusätzlich dazu besteht die Möglichkeit, dass die mindestens zwei Zylinderlinsen einer Gruppe unterschiedlich hinsichtlich der Form ihrer optisch funktionalen Fläche sind. Alternativ oder zusätzlich dazu besteht die Möglichkeit, dass die mindestens zwei Zylinderlinsen einer Gruppe unterschiedlich hinsichtlich ihrer numerischen Apertur sind. Mit sämtlichen der vorgenannten Maßnahmen lässt sich erreichen, dass auf die optisch funktionalen Grenzflächen auftreffende Teilstrahlen des zu formenden Lichtstrahls in der Bearbeitungsebene nicht derart überlagert werden, dass in der Intensitätsverteilung störende Intensitätsspitzen entstehen.

Dabei kann vorgesehen sein, dass die konkaven Zylinderlinsen und die konvexen Zylinderlinsen abwechselnd zueinander angeordnet sind, wobei die Zylinderachsen sowohl der konkaven als auch der konvexen Zylinderlinsen sich in gleicher Richtung erstrecken.

Gemäß einer bevorzugten Ausführungsform der vorliegenden Erfindung sind innerhalb mindestens einer der Gruppen mindestens zwei Arten mit jeweils einer Mehrzahl von Zylinderlinsen vorgesehen, wobei eine jede der Zylinderlinsen der ersten Art unterschiedliche Eigenschaften aufweist verglichen mit einer jeder der Zylinderlinsen der zweiten Art. Beispielsweise können dabei auf mindestens einer der optisch funktionalen Grenzflächen jeweils nebeneinander konvexe Zylinderlinsen der ersten Art, konkave Zylinderlinsen, konvexe Zylinderlinsen der zweiten Art und konkave Zylinderlinsen abwechselnd angeordnet sein. Durch eine derartige Anordnung besteht die Möglichkeit, dass die Scheitellinien der konkaven Zylinderlinsen der ersten optisch funktionalen Grenzfläche in einer Richtung senkrecht zur Ausbreitungsrichtung des Lichtstrahles versetzt sind gegenüber den Scheitellinien der konkaven Linsen der zweiten optisch funktionalen Grenzfläche. Dadurch können beispielsweise Teilstrahlen, die auf gleiche Bereiche benachbarter konkaver Zylinderlinsen der ersten optisch funktionalen Grenzfläche auftreffen durch die zweite optisch funktionale Grenzfläche derart abgelenkt werden, dass sie in der Bearbeitungsebene nicht überlagert werden. Auf diese Weise werden die unter Bezugnahme auf Fig. 2a und Fig. 2b beschriebenen Intensitätsspitzen, die sich bei vielen Anwendungen als störend erweisen, nicht erzeugt.

Es besteht erfindungsgemäß die Möglichkeit, dass die Zylinderachsen der Zylinderlinsen auf der ersten optisch funktionalen Grenzfläche im Wesentlichen parallel sind zu den Zylinderachsen der Zylinderlinsen auf der zweiten optisch funktionalen Grenzfläche.

Weiterhin kann vorgesehen sein, dass die Vorrichtung eine dritte und eine vierte optisch funktionale Grenzfläche mit Zylinderlinsen aufweist. Insbesondere können dabei auf den dritten und vierten optisch funktionalen Grenzflächen Zylinderlinsen angeordnet sein, deren Zylinderachsen parallel zueinander und senkrecht zu den Zylinderachsen der Zylinderlinsen auf der ersten und der zweiten optisch funktionalen Grenzfläche sind. Dabei können die Zylinderlinsen der dritten und vierten optisch funktionalen Grenzfläche weiterhin derart mit zwei unterschiedlichen Arten von beispielsweise konvexen Zylinderlinsen ausgestattet sein, dass auch hinsichtlich der zweiten zu der Ausbreitungsrichtung senkrechten Richtung eine Überlagerung von beispielsweise durch konkave Zylinderlinsen hindurchgetretenen Teilstrahlen in der Bearbeitungsebene weitestgehend vermieden wird, so dass auch hinsichtlich der zweiten Richtung keine Intensitätsspitzen in der Intensitätsverteilung in der Bearbeitungsebene auftreten.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1a: eine schematische Seitenansicht einer erfindungsgemäßen Vorrichtung beziehungsweise auch einer Vorrichtung gemäß dem Stand der Technik;
- Fig. 1b: eine Ansicht gemäß dem Pfeil Ib in Fig. 1a ;
- Fig. 2a: eine schematische Seitenansicht einer Vorrichtung zur Formung eines Lichtstrahles gemäß dem Stand der Technik;
- Fig. 2b: schematisch eine Intensitätsverteilung, die mit einer Vorrichtung gemäß Fig. 2a erzielbar ist;
- Fig. 3a: eine schematische, detaillierte Seitenansicht der erfindungsgemäßen Vorrichtung;
- Fig. 3b: schematisch eine Intensitätsverteilung, die mit einer Vorrichtung gemäß Fig. 3a erzielbar ist.

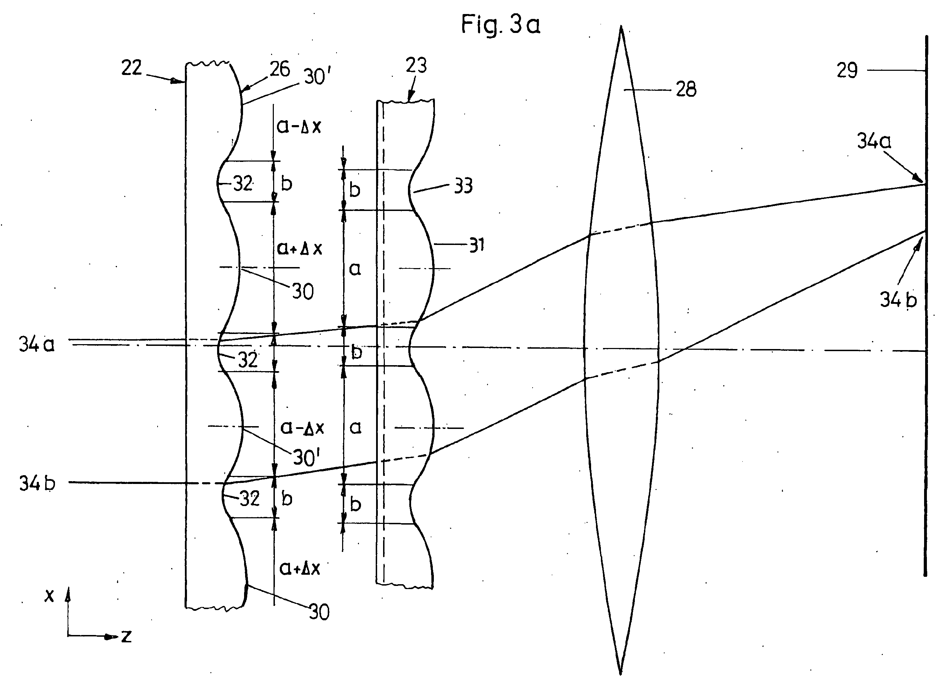

Fig. 1a und Fig. 1b sind derart schematisiert, dass sie sowohl die Vorrichtung aus dem Stand der Technik gemäß Fig. 2a als auch eine erfindungsgemäße Vorrichtung gemäß Fig. 3a darstellen können. Die in Fig. 1a und Fig. 1b dargestellten Bauteile sind zum Einen mit einstelligen Bezugszeichen 1 bis 9 versehen und bezeichnen dadurch Teile, die in der Beschreibung zum Stand der Technik gemäß Fig. 2a erläutert wurden. Weiterhin werden die gleichen Teile mit zweistelligen Bezugszeichen 21 bis 29 versehen und bezeichnen dabei einzelne Teile der erfindungsgemäßen Vorrichtung gemäß Fig. 3a. Insbesondere läuft erfindungsgemäß in Fig. 1a und Fig. 1b ein Laserstrahl 21 in positiver Z-Richtung durch Linsenarrays 22, 23 und wird anschließend von einem als Fourierlinse dienenden Linsenmittel 28 auf eine Bearbeitungsebene 29 fokussiert. Die Linsenarrays 22, 23 weisen ähnlich dem Stand der Technik auf ihren Eintrittsseiten optisch funktionale Flächen 24, 25 und auf ihren Austrittsseiten optisch funktionale Flächen 26, 27 auf.

Aus Fig. 3a sind detailliert die Unterschiede zum Stand der Technik ersichtlich. Fig. 3a zeigt wiederum entsprechend Fig. 2a nur die XZ-Ebene, so dass nur die auf den Austrittsseiten angeordneten optisch funktionalen Grenzflächen 26, 27 erkennbar sind. Die auf den Eintrittsseiten angeordneten optisch funktionalen Grenzflächen 24, 25 können jedoch ähnlich strukturiert sein wie die Grenzflächen 26, 27.

Die optisch funktionale Grenzfläche 27 des zweiten Linsenarrays 23 entspricht im Wesentlichen der optisch funktionalen Grenzfläche 7 des zweiten Linsenarrays 3 gemäß Fig. 2a. Auch hier sind wiederum konvexe Zylinderlinsen 31 vorgesehen, die sich mit konkaven Zylinderlinsen 33 abwechseln. Insbesondere sind dabei sämtliche konvexe Zylinderlinsen 31 gleich breit, das heißt ihre Erstreckung a in X-Richtung ist für jede der konvexen Zylinderlinsen 31 gleich groß. Weiterhin sind auch die zwischen den einzelnen konvexen Zylinderlinsen 31 angeordneten konkaven Zylinderlinsen 33 sämtlich gleich groß, das heißt sie besitzen sämtlich eine gleich große Erstreckung b in X-Richtung.

Unterschiedlich gegenüber dem Stand der Technik gemäß Fig. 2a ist das Linsenarray 22. Auf der austrittsseitig angeordneten optisch funktionalen Grenzfläche 26 gibt es zwei Arten von in X-Richtung unterschiedlich breiten konvexen Zylinderlinsen 30, 30'. Die breitere Art der Zylinderlinsen 30 weist in X-Richtung eine Erstreckung a + Δx auf, ist somit um die Größe Δx größer als a. Die kleinere der beiden Arten von Zylinderlinsen 30' weist in X-Richtung eine Erstreckung a - Δx auf, ist somit in X-Richtung um die Größe Δx kleiner als a. Die Scheitelpunkte dieser Zylinderlinsen 30, 30' fluchten in Z-Richtung mit den Scheitelpunkten der konvexen Zylinderlinsen 31. Weiterhin ist zwischen jeweils einer konvexen Zylinderlinse 30 der ersten Art und einer Zylinderlinse 30' der zweiten Art eine konkave Zylinderlinse 32 angeordnet, wobei die Erstreckung b einer jeder diesen konkaven Zylinderlinsen 32 gleich groß ist und der Erstreckung b der konkaven Zylinderlinsen 33 des zweiten Linsenarrays 23 entspricht.

Durch die Wahl dieser Erstreckungen a + Δx, a - Δx und b sind jeweils die Scheitelpunkte der konkaven Zylinderlinsen 32 des ersten Linsenarrays 22 in X-Richtung gegenüber den entsprechenden Scheitellinien der konkaven Zylinderlinsen 33 des zweiten Linsenarrays 23 verschoben.

Auf diese Weise wird erreicht, dass Teilstrahlen 34a, 34b der Laserstrahlung 21, die unter gleichem Winkel auf gleiche Abschnitte benachbarter konkaver Zylinderlinsen 32 des ersten Linsenarrays 22 auftreffen, dieses zwar unter gleichem Winkel verlassen, trotzdem aber nicht in der Bearbeitungsebene 29 von dem Linsenmittel 28 an den gleichen Ort fokussiert werden. Dies hat seinen Grund darin, dass sie aufgrund der Verschiebung der Scheitellinien der konkaven Zylinderlinsen 32 des ersten Linsenarrays 22 gegenüber entsprechenden konkaven Zylinderlinsen 33 des zweiten Linsenarrays 23 nicht an entsprechenden Orten in die konvexen Zylinderlinsen 31 des zweiten Linsenarrays 23 eintreten. Aus diesem Grund treten sie aus dem zweiten Linsenarray 23 unter unterschiedlichen Winkeln aus, so dass sie von dem als Fourierlinse dienenden Linsenmittel 28 in unterschiedliche Punkte fokussiert werden. Dies ist in Fig. 3a auf der rechten Seite deutlich ersichtlich.

Da somit die durch die konkaven Zylinderlinsen 32 hindurchtretenden Lichtstrahlen nicht sämtlich an den gleichen Stellen in der Bearbeitungsebene 29 überlagert werden, ergeben sich auch nicht die äußeren Intensitätsspitzen 19 zwischen dem Plateau 18 und den abfallenden Flanken 20, wie dies aufgrund einer Vorrichtung gemäß Fig. 2a aus Fig. 2b ersichtlich ist. Vielmehr kann mittels einer erfindungsgemäßen Vorrichtung eine Intensitätsverteilung gemäß Fig. 3b erzielt werden, die ausgehend von einem mittleren Plateau 35 sich an dieses direkt anschließende abfallende Flanken 36 aufweist. Unter Umständen können die abfallenden Flanken 36 etwas weniger steil ausgebildet sein als die abfallenden Flanken 20 der Intensitätsverteilung gemäß Fig. 2b. Trotzdem ist eine aus Fig. 3b ersichtliche Intensitätsverteilung für viele Anwendungen deutlich geeigneter als die Intensitätsverteilung gemäß Fig. 2b.

Es besteht erfindungsgemäß die Möglichkeit, in dem ersten Linsenarray 22 nicht zwei Arten unterschiedlicher konvexer Zylinderlinsen 30, 30' vorzusehen, sondern beispielsweise drei oder vier oder mehr unterschiedliche Arten. Sämtliche dieser Arten von konvexen Zylinderlinsen können eine unterschiedliche Breite vorsehen, wie beispielsweise a + Δx und a - Δx, a+ 2Δx und a - 2Δx, a + 3Δx und a - 3Δx, und so weiter. Auf diese Weise ergeben sich drei oder mehr verschiedene Arten von Verschiebungen der Scheitellinien der konkaven Zylinderlinsen 32 gegenüber den Scheitellinien der konkaven Zylinderlinsen 33. Daraus resultieren nicht zwei sondern drei oder mehr verschiedene Auftreffpunkte von Teilstrahlen, die unter gleichem Winkel auf gleiche Orte unterschiedlicher konkaver Zylinderlinsen 32 auftreffen. Durch die Anzahl der unterschiedlichen Arten konvexen Zylinderlinsen 30, 30' und so weiter lässt sich somit die Form der Intensitätsverteilung, die mit der erfindungsgemäßen Vorrichtung erzielbar ist, entsprechend erfüllbarer Vorgaben modifizieren.

Es besteht erfindungsgemäß weiterhin die Möglichkeit, nicht nur die Erstreckung der konvexen Zylinderlinsen 30, 30' in X-Richtung zu verändern, sondern auch die Erstreckung der konkaven Zylinderlinsen 32 in X-Richtung zu verändern. Weiterhin besteht auch die Möglichkeit, in dem zweiten Linsenarray 23 unterschiedlich große konvexe oder konkave Zylinderlinsen 31, 33 zu verwenden. Weiterhin besteht die Möglichkeit, auch auf der eingangsseitigen optisch funktionalen Grenzfläche 24, 25 der Linsenarrays 22, 23 unterschiedliche Arten von konvexen Zylinderlinsen und/oder konkaven Zylinderlinsen vorzusehen, um in Y-Richtung einen ähnlichen Effekt zu erzielen wie in X-Richtung.

Die vorgenannten, anhand Fig. 3a erläuterten Modifikationen betreffen unterschiedliche Aperturen unterschiedlicher Arten von Zylinderlinsen. Durch diese unterschiedlichen Aperturen wird insbesondere eine Verschiebung der Scheitellinien einander zugeordneter Zylinderlinsen erreicht. Es besteht erfindungsgemäß jedoch die Möglichkeit, andere Eigenschaften der Linsen zu verändern. Beispielsweise besteht die Möglichkeit, auf der austrittsseitigen optisch funktionalen Grenzfläche 26 des ersten Linsenarrays 22 zwei Arten von konvexen Zylinderlinsen und/oder zwei Arten von konkaven Zylinderlinsen vorzusehen, die zueinander unterschiedliche Brennweiten aufweisen. Auch auf diese Weise kann gewährleistet werden, dass beispielsweise durch zwei benachbarte konkave Zylinderlinsen durchgetretene Teilstrahlen in der Bearbeitungsebene 29 nicht auf einen Punkt fokussiert werden.

Weiterhin besteht die Möglichkeit, dass die Form der Zylinderlinsen variiert wird. Insbesondere können die Zylinderlinsen asphärische Formen aufweisen. Es besteht somit die Möglichkeit zwei Arten von konvexen Zylinderlinsen zu schaffen, die eine unterschiedliche asphärische Form aufweisen. Weiterhin können auch zwei Arten von konkaven Zylinderlinsen geschaffen werden, die eine unterschiedliche asphärische Form aufweisen.

Es besteht weiterhin die Möglichkeit, zwei Arten von konkaven und/oder konvexen Zylinderlinsen vorzusehen, die eine unterschiedliche numerische Apertur aufweisen.

Weiterhin besteht die Möglichkeit, jeweils in einer Art von konkaven oder konvexen Zylinderlinsen eine definierte Veränderung der Form der Zylinderlinsen gegenüber entsprechenden benachbarten Zylinderlinsen vorzunehmen.

Durch sämtliche der vorgenannten Maßnahmen lässt sich das Intensitätsprofil, das mit der erfindungsgemäßen Vorrichtung erzielt werden kann, gemäß entsprechenden Vorgaben definiert einstellen.

Es besteht weiterhin die Möglichkeit, alternativ oder zusätzlich zu refraktiven Abbildungselementen auf den optisch funktionalen Grenzflächen diffraktive Abbildungselemente zu verwenden. Als refraktive Abbildungselemente auf den optisch funktionalen Grenzflächen 24, 25, 26, 27 sind die konvexen und konkaven Zylinderlinsen 30, 31, 32, 33 anzusehen. Als difrative Abbildungselemente könnten beispielsweise gitterähnliche Strukturen, oder periodische Brechungsindexvariationen oder dergleichen verwendet werden. Auch besteht wiederum die Möglichkeit, dass zwei Gruppen von diffraktiven Abbildungselementen vorgesehen werden, wobei jeweils innerhalb mindestens einer der Gruppen mindestens zwei der Abbildungselemente unterschiedliche Eigenschaften aufweisen. Auch auf diese Weise kann gezielt die Intensitätsverteilung, die mit der erfindungsgemäßen Vorrichtung erreicht werden kann, beeinflusst werden.

## Patentansprüche

1. Vorrichtung zur Formung eines Lichtstrahls, umfassend
- mindestens zwei optisch funktionale Grenzflächen (24, 25, 26, 27), die in Ausbreitungsrichtung (z) des zu formenden Lichtstrahles (21) hintereinander angeordnet sind, so dass der Lichtstrahl (21) durch die mindestens zwei optisch funktionalen Grenzflächen (24, 25, 26, 27) nacheinander hindurchtreten kann;
- jeweils zwei Gruppen von Zylinderlinsen (30, 30', 31, 32, 33) auf jeder der optisch funktionalen Grenzflächen (24, 25, 26, 27), wobei die erste der beiden Gruppen konvexe Zylinderlinsen (30, 30', 31) und die zweite der beiden Gruppen konkave Zylinderlinsen (32, 33) umfasst, und wobei innerhalb mindestens einer der Gruppen mindestens zwei der Zylinderlinsen (30, 30', 31, 32, 33) unterschiedliche Eigenschaften aufweisen;
**dadurch gekennzeichnet, dass**
- auf einer ersten der optisch funktionalen Grenzflächen (24, 26) innerhalb einer ersten Gruppe mindestens zwei der Zylinderlinsen (30, 30') eine unterschiedliche Erstreckung (a + Δx, a - Δx) in der Richtung aufweisen, in der die Zylinderlinsen (30, 30', 31, 32, 33) nebeneinander angeordnet sind, dass
- auf dieser ersten optisch funktionalen Grenzfläche (24, 26) sämtliche Zylinderlinsen (32) der anderen zweiten Gruppe die gleiche Erstreckung (b) in der Richtung aufweisen, in der die Zylinderlinsen (30, 30', 31, 32, 33) nebeneinander angeordnet sind, dass
- auf mindestens einer anderen der optisch funktionalen Grenzflächen (25, 27) sämtliche Zylinderlinsen (31) der ersten Gruppe die gleiche Erstreckung (a) in der Richtung aufweisen, in der die Zylinderlinsen (30, 30', 31, 32, 33) nebeneinander angeordnet sind, und dass
- auf dieser mindestens einen anderen optisch funktionalen Grenzfläche (25, 27) sämtliche Zylinderlinsen (33) der zweiten Gruppe die gleiche Erstreckung (b) in der Richtung aufweisen, in der die Zylinderlinsen (30, 30', 31, 32, 33) nebeneinander angeordnet sind wobei diese Erstreckung (b) der Erstreckung (b) der Zylinderlinsen (32) der zweiten Gruppe in der ersten optisch funktionalen Grenzfläche (24, 26) entspricht.

2. Vorrichtung nach Anspruch 1, **dadurch gekennzeichnet, dass** die mindestens zwei Zylinderlinsen (30, 30', 32) einer Gruppe unterschiedlich hinsichtlich ihrer Brennweite sind.

3. Vorrichtung nach einem der Ansprüche 1 bis 2, **dadurch gekennzeichnet, dass** die mindestens zwei Zylinderlinsen (30, 30', 32) einer Gruppe unterschiedlich hinsichtlich der Form ihrer optisch funktionalen Fläche sind.

4. Vorrichtung nach einem der Ansprüche 1 bis 3, **dadurch gekennzeichnet, dass** die mindestens zwei Zylinderlinsen (30, 30', 32) einer Gruppe unterschiedlich hinsichtlich ihrer numerischen Apertur sind.

5. Vorrichtung nach einem der Ansprüche 1 bis 4, **dadurch gekennzeichnet, dass** die konkaven Zylinderlinsen (32, 33) und die konvexen Zylinderlinsen (30, 30', 31) abwechselnd zueinander angeordnet sind, wobei die Zylinderachsen sowohl der konkaven als auch der konvexen Zylinderlinsen (30, 30', 31, 32, 33) sich in gleicher Richtung (X, Y) erstrecken

6. Vorrichtung nach einem der Ansprüche 1 bis 5, **dadurch gekennzeichnet, dass** innerhalb mindestens einer der Gruppen mindestens zwei Arten mit jeweils einer Mehrzahl von Zylinderlinsen (30, 30', 32) vorgesehen sind, wobei eine jede der Zylinderlinsen (30, 30', 32) der ersten Art unterschiedliche Eigenschaften aufweist verglichen mit einer jeder der Zylinderlinsen (30, 30', 32) der zweiten Art.

7. Vorrichtung nach Anspruch 6, **dadurch gekennzeichnet, dass** auf mindestens einer der optisch funktionalen Grenzflächen (24, 25, 26, 27) jeweils nebeneinander konvexe Zylinderlinsen (30) der ersten Art, konkave Zylinderlinsen (32), konvexe Zylinderlinsen (30') der zweiten Art und konkave Zylinderlinsen (32) abwechselnd angeordnet sind.

8. Vorrichtung nach Anspruch 7, **dadurch gekennzeichnet, dass** die Scheitellinien der konkaven Zylinderlinsen (32) der ersten optisch funktionalen Grenzfläche (26) in einer Richtung (X) senkrecht zur Ausbreitungsrichtung (Z) des Lichtstrahles (21) versetzt sind gegenüber den Scheitellinien von konkaven Linsen (33) der zweiten optisch funktionalen Grenzfläche (27).

9. Vorrichtung nach einem der Ansprüche 1 bis 8, **dadurch gekennzeichnet, dass** die Zylinderachsen der Zylinderlinsen (30, 30', 32) auf der ersten optisch funktionalen Grenzfläche (26) im Wesentlichen parallel sind zu den Zylinderachsen der Zylinderlinsen (31, 33) auf der zweiten optisch funktionalen Grenzfläche (27).

10. Vorrichtung nach einem der Ansprüche 1 bis 9, **dadurch gekennzeichnet, dass** die Vorrichtung eine dritte und eine vierte optisch funktionale Grenzfläche mit Zylinderlinsen aufweist.

11. Vorrichtung nach Anspruch 10, **dadurch gekennzeichnet, dass** auf den dritten und vierten optisch funktionalen Grenzflächen (24, 25) Zylinderlinsen angeordnet sind, deren Zylinderachsen parallel zueinander und senkrecht zu den Zylinderachsen der Zylinderlinsen (30, 30', 31, 32, 33) auf der ersten und der zweiten optisch funktionalen Grenzfläche (26, 27) sind

## Claims

1. Apparatus for shaping a light beam, comprising
- at least two optically functional boundary surfaces (24, 25, 26, 27) that are arranged one behind another in the propagation direction (z) of the light beam (21) to be shaped, such that the light beam (21) can pass through the at least two optically functional boundary surfaces (24, 25, 26, 27) one after another; and
- in each case two groups of cylindrical lenses (30, 30', 31, 32, 33) on each of the optically functional boundary surfaces (24, 25, 26, 27), the first of the two groups comprising convex cylindrical lenses (30, 30', 31), and the second of the two groups comprising concave cylindrical lenses (32, 33), and at least two of the cylindrical lenses (30, 30', 31, 32, 33) having different properties within at least one of the groups;
**characterized in that**
- on one of the first of the optically functional boundary surfaces (24, 26) within a first group at least two of the cylindrical lenses (30, 30') have a different extent (a + Δx, a - Δx) in the direction in which the cylindrical lenses (30, 30', 31, 32, 33) are arranged next to one another, **in that**
- on this first optically functional boundary surface (24, 26) all the cylindrical lenses (32) of the other, second group have the same extent (b) in the direction in which the cylindrical lenses (30, 30', 31, 32, 33) are arranged next to one another, **in that**
- on at least one other of the optically functional boundary surfaces (25, 27) all the cylindrical lenses (31) of the first group have the same extent (a) in the direction in which the cylindrical lenses (30, 30', 31, 32, 33) are arranged next to one another, and **in that**
- on this at least one other optically functional boundary surface (25, 27) all the cylindrical lenses (33) of the second group have the same extent (b) in the direction in which the cylindrical lenses (30, 30', 31, 32, 33) are arranged next to one another, this extent (b) corresponding to the extent (b) of the cylindrical lenses (32) of the second group in the first optically functional boundary surface (24, 26).

2. Apparatus according to Claim 1, **characterized in that** the at least two cylindrical lenses (30, 30', 32) of a group differ in their focal length.

3. Apparatus according to one of Claims 1 to 2, **characterized in that** the at least two cylindrical lenses (30, 30', 32) of a group differ in the shape of their optically functional surface.

4. Apparatus according to one of Claims 1 to 3, **characterized in that** the at least two cylindrical lenses (30, 30', 32) of a group differ in their numerical aperture.

5. Apparatus according to one of Claims 1 to 4, **characterized in that** the concave cylindrical lenses (32, 33) and the convex cylindrical lenses (30, 30', 31) are arranged alternately with one another, the cylinder axes both of the concave and for the convex cylindrical lenses (30, 30', 31, 32, 33) extending in the same direction (X, Y).

6. Apparatus according to one of Claims 1 to 5, **characterized in that** at least two types with in each case a plurality of cylindrical lenses (30, 30', 32) are provided within at least one of the groups, one each of the cylindrical lenses (30, 30', 32) of the first type having different properties compared with one each of the cylindrical lenses (30, 30', 32) of the second type.

7. Apparatus according to Claim 6, **characterized in that** convex cylindrical lenses (30) of the first type, concave cylindrical lenses (33), convex cylindrical lenses (30') of the second type and concave cylindrical lenses (32) are arranged alternately next to one another in each case on at least one of the optically functional boundary surfaces (24, 25, 26, 27).

8. Apparatus according to Claim 7, **characterized in that** the vertex lines of the concave cylindrical lenses (32) of the first optically functional boundary surface (26) are offset from the vertex lines of the concave lenses (33) of the second optically functional boundary surface (27) in a direction (X) perpendicular to the propagation direction (Z) of the light beam (21).

9. Apparatus according to one of Claims 1 to 8, **characterized in that** the cylinder axes of the cylindrical lenses (30, 30', 32) on the first optically functional boundary surface (26) are substantially parallel to the cylinder axes of the cylindrical lenses (31, 33) on the second optically functional boundary surface (27).

10. Apparatus according to one of Claims 1 to 9, **characterized in that** the apparatus has a third and a fourth optically functional boundary surface with cylindrical lenses.

11. Apparatus according to Claim 10, **characterized in that** arranged on the third and fourth optically functional boundary surfaces (24, 25) are cylindrical lenses whose cylinder axes are parallel to one another and perpendicular to the cylinder axes of the cylindrical lenses (30, 30', 31, 32, 33) on the first and the second optically functional boundary surface (26, 27).

## Revendications

1. Dispositif pour mettre en forme un rayon lumineux comprenant
- au moins deux surfaces limites (24, 25, 26, 27) optiquement fonctionnelles qui sont disposées l'une derrière l'autre dans le sens de propagation (Z) du rayon lumineux (21) à mettre en forme de sorte que le rayon lumineux (21) puisse traverser l'une après l'autre les au moins deux surfaces limites (24, 25, 26, 27) optiquement fonctionnelles ;
- à chaque fois deux groupes de lentilles cylindriques (30, 30', 31, 32, 33) sur chacune des surfaces limites (24, 25, 26, 27) optiquement fonctionnelles, le premier des deux groupes comprenant des lentilles cylindriques convexes (30, 30', 31) et le deuxième des deux groupes des lentilles cylindriques concaves (32, 33), et au moins deux des lentilles cylindriques (30, 30', 31, 32, 33) au sein d'au moins l'un des groupes présentant des caractéristiques différentes ;
**caractérisé**
- **en ce que** sur une première des surfaces limites (24, 26) optiquement fonctionnelles, à l'intérieur d'un premier groupe, au moins deux des lentilles cylindriques (30, 30') présentent une projection différente (a + Δx, a - Δx) dans la direction dans laquelle les lentilles cylindriques (30, 30', 31, 32, 33) sont disposées les unes à côté des autres,
- **en ce que** sur cette première surface limite (24, 26) optiquement fonctionnelle, toutes les lentilles cylindriques (32) du deuxième groupe présentent la même projection (b) dans la direction dans laquelle les lentilles cylindriques (30, 30', 31, 32, 33) sont disposées les unes à côté des autres,
- **en ce que** sur au moins une autre des surfaces limites (25, 27) optiquement fonctionnelles, toutes les lentilles cylindriques (31) du premier groupe présentent la même projection (a) dans la direction dans laquelle les lentilles cylindriques (30, 30', 31, 32, 33) sont disposées les unes à côté des autres, et
- **en ce que** sur cette au moins une autre surface limite (25, 27) optiquement fonctionnelle, toutes les lentilles cylindriques (33) du deuxième groupe présentent la même projection (b) dans la direction dans laquelle les lentilles cylindriques (30, 30', 31, 32, 33) sont disposées les unes à côté des autres, cette projection (b) correspondant à la projection (b) des lentilles cylindriques (32) du deuxième groupe dans la première surface limite (24, 26) optiquement fonctionnelle.

2. Dispositif selon la revendication 1, **caractérisé en ce que** les au moins deux lentilles cylindriques (30, 30', 32) d'un groupe sont différentes du point de vue de leur distance focale.

3. Dispositif selon l'une des revendications 1 à 2, **caractérisé en ce que** les au moins deux lentilles cylindriques (30, 30', 32) d'un groupe sont différentes du point de vue de la forme de leur surface optiquement fonctionnelle.

4. Dispositif selon l'une des revendications 1 à 3, **caractérisé en ce que** les au moins deux lentilles cylindriques (30, 30', 32) d'un groupe sont différentes du point de vue de la forme de leur ouverture numérique.

5. Dispositif selon l'une des revendications 1 à 4, **caractérisé en ce que** les lentilles cylindriques concaves (32, 33) et les lentilles cylindriques convexes (30, 30', 31) sont disposées en alternance, les axes de cylindre des lentilles cylindriques concaves ainsi que convexes (30, 30', 31, 32, 33) s'étendant dans la même direction (X, Y) .

6. Dispositif selon l'une des revendications 1 à 5, **caractérisé en ce qu'**au moins deux types incluant respectivement une pluralité de lentilles cylindriques (30, 30', 32) sont prévus au sein d'au moins l'un des groupes, chacune des lentilles cylindriques (30, 30', 32) du premier type présentant des caractéristiques différentes de chacune des lentilles cylindriques (30, 30', 32) du deuxième type.

7. Dispositif selon la revendication 6, **caractérisé en ce que** sur au moins l'une des surfaces limites (24, 25, 26, 27) optiquement fonctionnelles sont disposées en alternance et à chaque fois les une à côté des autres des lentilles cylindriques convexes (30) du premier type, des lentilles cylindriques concaves (32), des lentilles cylindriques convexes (30') du deuxième type et des lentilles cylindriques concaves (32).

8. Dispositif selon la revendication 7, **caractérisé en ce que** les lignes de sommet des lentilles cylindriques concaves (32) de la première surface limite (26) optiquement fonctionnelle sont décalées dans une direction (X) perpendiculaire au sens de propagation (Z) du rayon lumineux (21) par rapport aux lignes de sommet des lentilles concaves (33) de la deuxième surface limite (27) optiquement fonctionnelle.

9. Dispositif selon l'une des revendications 1 à 8, **caractérisé en ce que** les axes de cylindre des lentilles cylindriques (30, 30', 32) sur la première surface limite (26) optiquement fonctionnelle sont pour l'essentiel parallèles aux axes de cylindre des lentilles cylindriques (31, 33) sur la deuxième surface limite (27) optiquement fonctionnelle.

10. Dispositif selon l'une des revendications 1 à 9, **caractérisé en ce que** le dispositif présente une troisième et une quatrième surfaces limites optiquement fonctionnelles munies de lentilles cylindriques.

11. Dispositif selon la revendication 10, **caractérisé en ce que** sur les troisième et quatrième surfaces limites (24, 25) optiquement fonctionnelles sont disposées des lentilles cylindriques dont les axes de cylindre sont parallèles les uns aux autres et perpendiculaires aux axes de cylindre des lentilles cylindriques (30, 30', 31, 32, 33) sur les première et deuxième surfaces limites (26, 27) optiquement fonctionnelles.
